# EUROPEAN PATENT APPLICATION

(11) **EP 3 904 359 A1**
(43) Date of publication of application: **03.11.2021**
(21) Application number: 19906463.5
(22) Date of filing: 13.12.2019
(51) Int. Cl.: C07F 5/00, C07F 19/00, C09K 11/06, C07C 49/167, C07F 9/53

(54) **RARE EARTH COMPOUND, PHOSPHINE OXIDE COMPOUND, AND LUMINESCENT BODY**

(30) Priority: 25.12.2018 JP 2018241307
(71) Applicant: National University Corporation Hokkaido University, Sapporo-shi, Hokkaido 060-0808 (JP)
(72) Inventor: KITAGAWA, Yuichi, Sapporo-shi, Hokkaido 060-0808 (JP); SUZUE, Fumiya, Sapporo-shi, Hokkaido 060-0808 (JP); HASEGAWA, Yasuchika, Sapporo-shi, Hokkaido 060-0808 (JP); FUSHIMI, Koji, Sapporo-shi, Hokkaido 060-0808 (JP)
(74) Representative: Arnold & Siedsma
(86) International application number: PCT/JP2019/049046
(87) International publication number: WO 2020/137638

(57) **Abstract**

There is disclosed a rare earth compound comprising: one or a plurality of rare earth ions; and a ligand coordinated with the rare earth ion and having a condensed polycyclic aromatic group. At least part of the rare earth ions is a terbium(III) ion. The condensed polycyclic aromatic group is a residue formed by removing a hydrogen atom bonded to a condensed aromatic ring in formula (1) below from a condensed polycyclic aromatic compound represented by formula (1).

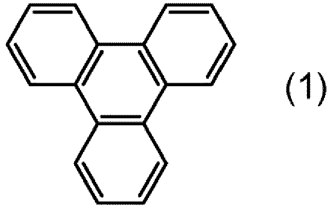

## Description

### Technical Field

The present invention relates to a rare earth compound, a phosphine oxide compound, and a luminescent body.

### Background Art

A rare earth complex is expected to be applied to fields such as displays for automobiles, construction, and a high-level security, as a high-luminance luminescent body. For example, a Eu complex or the like showing high-luminance red light emission has been proposed (for example, Patent Document 1).

### Citation List

### Patent Literature

Patent Document 1: WO 2018/155557

### Summary of Invention

### Technical Problem

On the other hand, a rare earth compound (or a rare earth complex) including a terbium(III) ion shows green light emission with high chromatic purity, and thus has attracted attention as a light-emitting material such as a security ink. However, the luminance of conventional rare earth compounds including a terbium(III) ion are not necessarily high, and there is a room for improvement in this regard.

Therefore, an object of an aspect of the present invention is to achieve higher luminance of a rare earth compound including a terbium(III) ion.

### Solution to Problem

An aspect of the present invention relates to a rare earth compound comprising: one or a plurality of rare earth ions; and a ligand coordinated with the rare earth ion and having a condensed polycyclic aromatic group. At least part of the rare earth ions is a terbium(III) ion. The condensed polycyclic aromatic group is a residue formed by removing a hydrogen atom bonded to a condensed aromatic ring in formula (1) below from a condensed polycyclic aromatic compound represented by formula (1). The condensed polycyclic aromatic compound may have a substituent bonded to the condensed aromatic ring in formula (1).

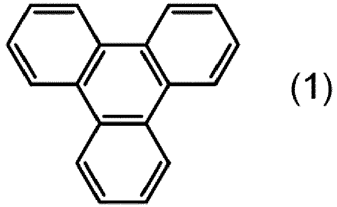

Another aspect of the present invention relates to a phosphine oxide compound represented by formula (20) below. This phosphine oxide compound can be used, for example, for producing the above-described rare earth compound.

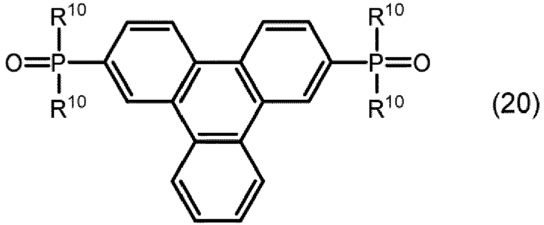

In formula (20), R¹⁰ represents an aryl group which may have a substituent. A plurality of R¹⁰s in one molecule may be the same as or different from each other.

Still another aspect of the present invention relates to a luminescent body including the above-described rare earth compound.

### Advantageous Effects of Invention

According to an aspect of the present invention, a rare earth compound including a terbium(III) ion (Tb(III) ions) and showing high-luminance light emission is provided. The rare earth compound according to the present invention can also exhibit satisfactory solubility with respect to various solvents except an alcohol-based solvent.

### Brief Description of Drawings

FIG. 1 shows emission and excitation spectra of a rare earth compound including a Tb(III) ion.
FIG. 2 shows emission and excitation spectra of a rare earth compound including a Tb(III) ion.
FIG. 3 shows emission and excitation spectra of a rare earth compound including a Eu(III) ion.
FIG. 4 shows an absorption spectrum of the rare earth compound including a Eu(III) ion.
FIG. 5 shows emission and excitation spectra of a rare earth compound including a Tb(III) ion and a Eu(III) ion.
FIG. 6 is a graph showing a relation between an emission intensity ratio and a temperature of the rare earth compound including a Tb(III) ion and a Eu(III) ion.

### Description of Embodiments

Hereinafter, some embodiments of the present invention will be described in detail. However, the present invention is not limited to the following embodiments.

A rare earth compound according to an embodiment is constituted by one or a plurality of rare earth ions, and a ligand coordinated with the rare earth ion and having a condensed polycyclic aromatic group. This rare earth compound is typically a rare earth complex. The condensed polycyclic aromatic group is a residue formed by removing a hydrogen atom bonded to a condensed aromatic ring in formula (1) below from a condensed polycyclic aromatic compound represented by formula (1). The condensed polycyclic aromatic compound may have a substituent bonded to the condensed aromatic ring in formula (1).

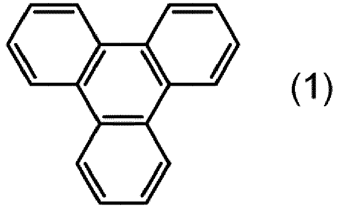

In a case where the rare earth compound includes one rare earth ion, this rare earth ion is a terbium(III) ion. In a case where the rare earth compound includes a plurality of rare earth ions, at least part of these ions is a Tb(III) ion. The plurality of rare earth ions may include a Tb(III) ion and an other rare earth ion. The rare earth compound including two or more kinds of rare earth ions can exhibit temperature-sensitive properties in which an emission intensity in each wavelength varies depending on temperatures. Other rare earth ions to be combined with Tb(III) ions may be, for example, an ion of at least one rare earth element selected from europium (Eu), neodymium (Nd), ytterbium (Yb), and gadolinium (Gd). Particularly, the rare earth compound may include a Tb(III) ion and a Eu(III) ion.

The condensed polycyclic aromatic group may be a monovalent condensed polycyclic aromatic group represented by formula (1a) below or a divalent condensed polycyclic aromatic group represented by formula (Ib) below. ^{∗} in these formulae represents a bond and the same applies also in other formulae.

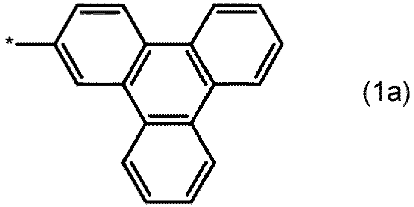

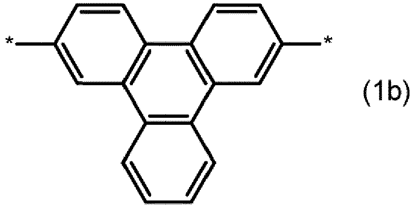

The ligand having a condensed polycyclic aromatic group may be a monodentate or multidentate phosphine oxide ligand. More specific examples of the ligand include a monodentate phosphine oxide ligand represented by formula (10) below and a bidentate phosphine oxide ligand represented by formula (11) below.

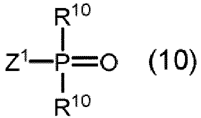

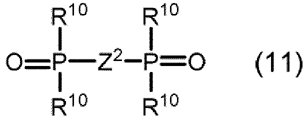

In formulae (10) and (11), Z¹ represents a monovalent condensed polycyclic aromatic group, and Z² represents a divalent condensed polycyclic aromatic group. In a case where the ligand having the condensed polycyclic aromatic group is a bidentate phosphine oxide ligand represented by formula (11), this rare earth compound typically includes two rare earth ions. Each of two phosphine oxide groups of the phosphine oxide ligand of formula (11) may form a coordinate bond with one rare earth ion.

R¹⁰ represents an aryl group which may have a substituent. A plurality of R¹⁰s in one molecule may be the same as or different from each other. The aryl group for R¹⁰ can be a residue formed by removing one hydrogen atom from the aromatic compound. Generally, R¹⁰ is an aryl group different from the above-described condensed polycyclic aromatic group. The number of carbon atoms of the aryl group is, for example, 6 to 14. Specific examples of the aryl group include a residue formed by removing one hydrogen atom from substituted or unsubstituted benzene, substituted or unsubstituted naphthalene, substituted or unsubstituted anthracene, or substituted or unsubstituted phenanthrene. Particularly, R¹⁰ may be a substituted or unsubstituted phenyl group. A substituent which the aryl group has may be a halogen atom.

Examples of the bidentate phosphine oxide ligand represented by formula (11) include a phosphine oxide compound represented by formula (20) below. R¹⁰ in formula (20) has the same meaning as R¹⁰ in formulae (10) and (11).

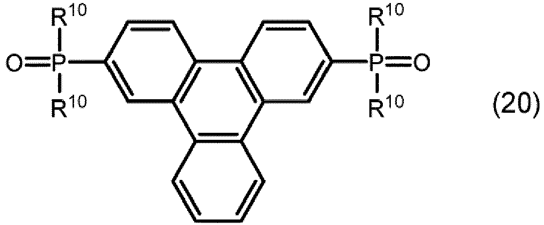

The rare earth compound according to the embodiment may further have a ligand other than the ligand having a condensed polycyclic aromatic group. For example, the rare earth compound may further have a diketone ligand represented by formula (30) below. The rare earth compound including the diketone ligand represented by formula (30) may have further more excellent properties from the viewpoint of enhanced emission or the like.

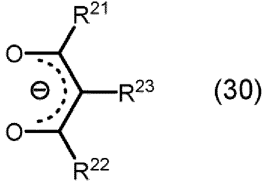

In formula (30), R²¹, R²², and R²³ each independently represent a hydrogen atom, an alkyl group, an halogenated group, an aryl group, or a heteroaryl group. The aryl group described herein may be an aryl group different from a condensed polycyclic aromatic group derived from the condensed polycyclic aromatic compound of formula (1).

The rare earth compound having the diketone ligand of formula (30) is represented, for example, by formula (I) or (II) below. Ln(III) in formula (II) represents a Tb(III) ion or a trivalent rare earth ion other than a Tb(III) ion. Other symbols in formulae (I) and (II) have the same meaning as described above.

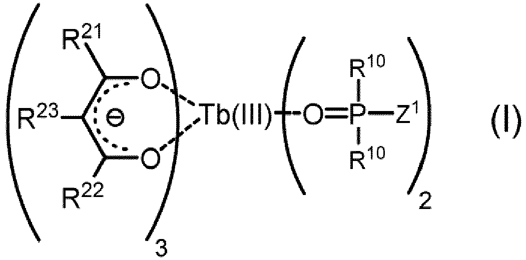

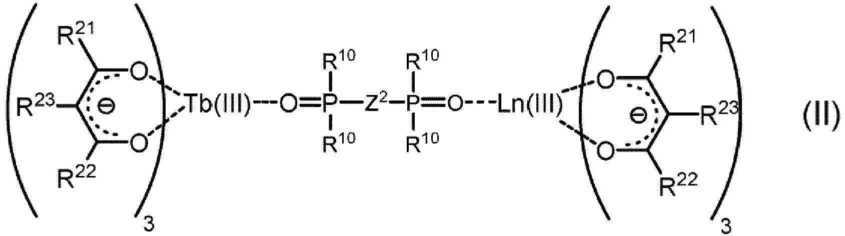

The rare earth compound according to the embodiment can be produced according to an ordinary synthesis method. Examples of the synthesis method will be shown in Examples described below.

A luminescent body including the rare earth compound according to the present embodiment can show high-luminance green light emission. This luminescent body may be, for example, a light-emitting ink.

### Examples

Hereinafter, the present invention will be described in more detail by means of Examples. However, the present invention is not limited to these Examples.

### 1. Synthesis of phosphine oxide ligand

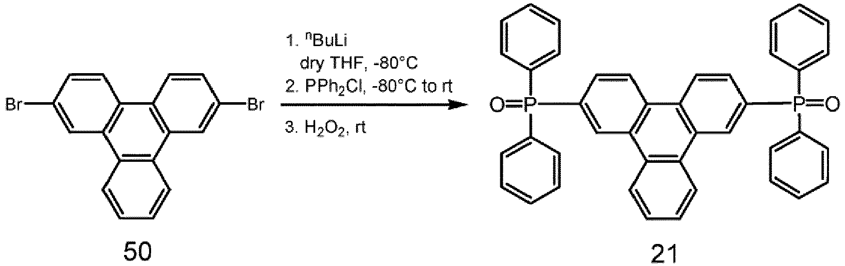

A solution containing 2,7-dibromotriphenylene 50 (1.0 mg, 2.6 mmol) and 100 mL of THF was cooled at -80°C or lower in an argon atmosphere. n-BuLi (3.7 mL, 1.1 mmol) was added dropwise thereto using a syringe. Next, chlorodiphenylphosphine (1.0 mL, 5.7 mmol) was added dropwise thereto using a syringe. The temperature of the reaction solution was returned to room temperature and the reaction solution was stirred for 20 hours. The reaction solution was dried and solidified by an evaporator. Products were extracted from the residue with dichloromethane and saturated saline. MgSO₄ for dehydration was added to the dichloromethane solution. An excessive amount of 30% H₂O₂ aqueous solution was added while cooling the solution after dehydration in ice, and then the solution was stirred for 2 hours. The products were extracted from the solution with dichloromethane and saturated saline. MgSO₄ for dehydration was added to the dichloromethane solution. The solvent was distilled from the solution after dehydration by an evaporator. Products were separated from the residue using a mixed solvent of dichloromethane/ethyl acetate as a developing solvent by silica-gel (60N) chromatography. The products were purified by recrystallization from dichloromethane to obtain 960 mg of crystals of a phosphine oxide compound 21 (yield: 59%).
¹H-NMR (CDCl₃, 400 MHz): d/ppm = 9.12 (d, J = 13.6 Hz, 2H), 8.70 (dd, J = 8.4, 2.8 Hz, 2H), 8.55 (dd, J= 6.4, 3.2 Hz, 2H), 7.73-7.84 (m, 10H), 7.57-7.66 (m, 6H), 7.48-7.53 (m, 8H).IR (ATR): 1146 (st, P=O), 3055 (st, C-H) cm⁻¹

### 2. Synthesis of rare earth compound

### Rare earth compound 1A

A solution containing the phosphine oxide compound 21 (200 mg, 0.32 mmol) and dichloromethane (80 mL) was added to a solution containing Tb(hfa)₃(H₂O)₂ (390 mg, 0.48 mmol) and dichloromethane (2.0 mL). The obtained reaction solution was stirred at room temperature for 5 hours. Thereafter, the reaction solution was dried and solidified by an evaporator. Dichloromethane (20 mL) was added to the residue and then filtered, and the filtrate was dried and solidified by an evaporator. The residue was purified by recrystallization from dichloromethane/hexane to obtain 90 mg of a rare earth compound 1A (yield: 11%).
ESI-MS: m/z calcd for C₁₀₉H₆₅F₃₀O₁₄P₄Tb₂ [M-hfa]⁺ = 2610.10; found: 2610.13.
Elemental analysis (%): calcd for C 48.60, H 2.36. found: C 48.24, H 2.19.
IR (ATR): 1141 (st, P=O), 1250 (st, C-F), 1654 (st, C=O), 3055 (st, C-H) cm⁻¹.

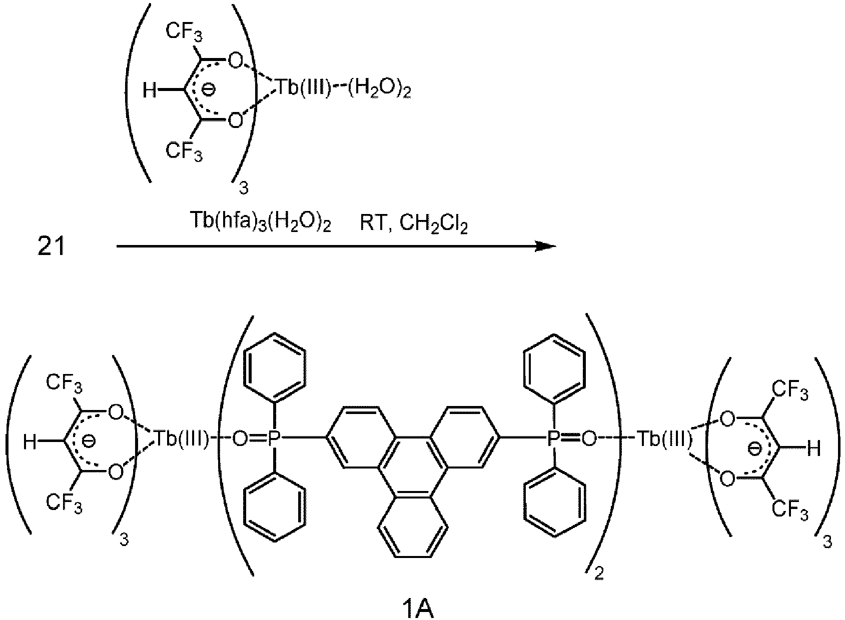

### Rare earth compound 1B

A solution containing the phosphine oxide compound 21 (110 mg, 0.16 mmol) and dichloromethane (50 mL) was added to a solution containing a tris(2,2,6,6-tetramethyl-3,5-heptadionato)terbium dimer (Tb₂(tmh)₆, 230 mg, 0.16 mmol) and 20 mL of dichloromethane. The obtained reaction solution was stirred at room temperature for 2 hours. Thereafter, the reaction solution was dried and solidified by an evaporator to obtain a rare earth compound 1B. IR (ATR): 1139 (st, P=O), 1573 (st, C=O), 3057 (st, arC-H) cm⁻¹. ESI-MS: m/z calcd for C₁₀₆H₉₈TbO₈P₄Tb [M-Tb-4tmh]⁺ = 1781.55; found: 1781.53.

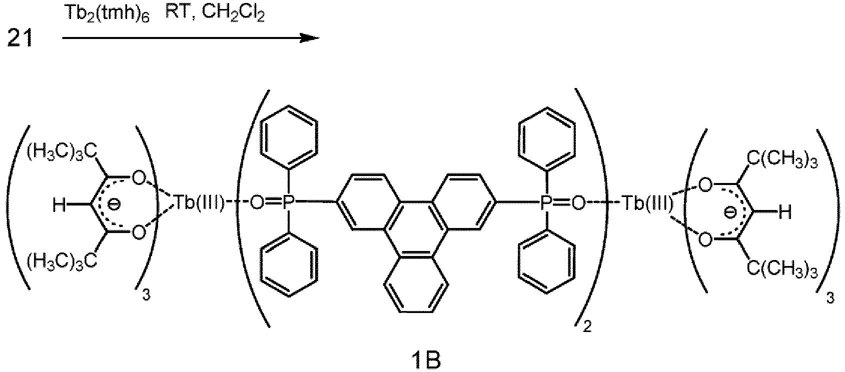

### Rare earth compound 1C

Tb(hfa)₃(H₂O)₂ (150 mg, 0.18 mmol) and Eu(hfa)₃(H₂O)₂ (150 mg, 0.18 mmol) were mixed. The mixture was ground and this ground mixture was suspended in dichloromethane (50 mL). The obtained suspension liquid was added dropwise to a solution containing the phosphine oxide compound 21 (115 mg, 0.18 mmol) and dichloromethane (80 mL). The obtained reaction liquid was stirred at room temperature for 5 hours. Thereafter, the reaction liquid was dried and solidified by an evaporator. Dichloromethane (40 mL) was added to the residue and then filtered, and the filtrate was dried and solidified by an evaporator. The residue was purified by recrystallization from dichloromethane/hexane to obtain 140 mg of a rare earth compound 1C (yield: 30%).
ESI-MS: m/z calcd for C₁₀₉H₆₅EuF₃₀O₁₄P₄Tb [M-hfa]⁺ = 2603.13; found: 2603.16.
Elemental analysis (%): calcd for C 48.72, H 2.37. found: C 48.40, H 2.16.
IR (ATR): 1138 (st, P=O), 1250 (st, C-F), 1653 (st, C=O) cm⁻¹.

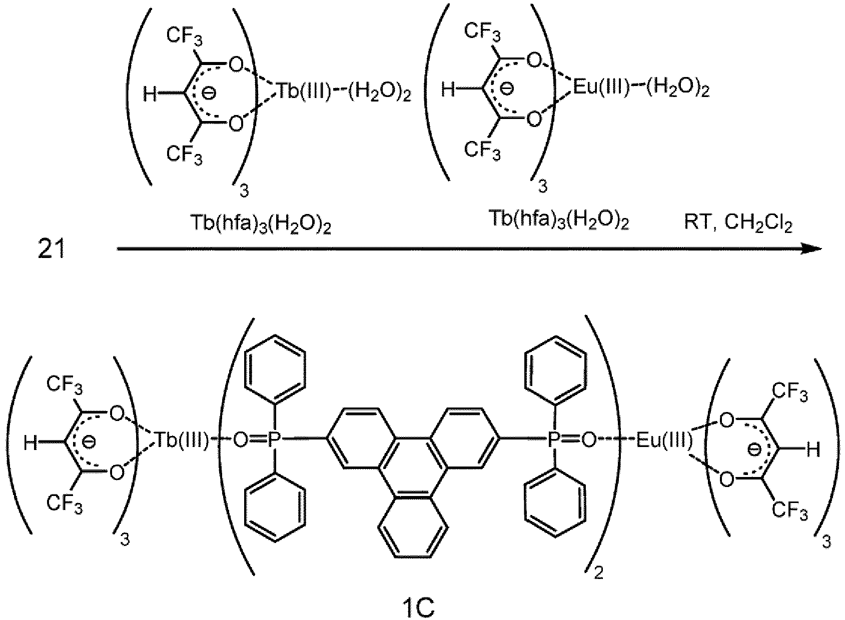

### Rare earth compound 1D

A rare earth compound 1D was obtained by the same method as in the synthesis of the rare earth compound 1A, except that Eu(hfa)₃(H₂O)₂ was used instead of Tb(hfa)₃(H₂O)₂.

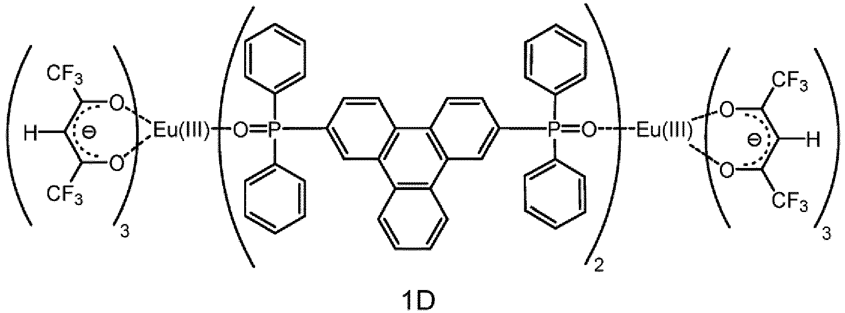

### 2. Evaluation of emission properties

### 2-1. Rare earth compounds 1A and 1B (Tb/Tb)

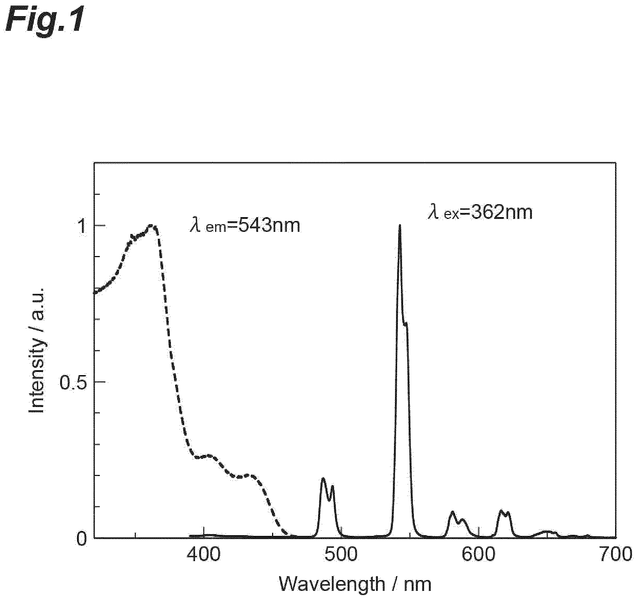

FIG. 1 shows emission and excitation spectra of the rare earth compound 1A (powder). In FIG. 1, the solid line indicates an emission spectrum (excitation wavelength: 362 nm) and the dashed line indicates an excitation spectrum (fluorescence wavelength: 543 nm). Green light emission by excitation was observed. In the excitation spectrum, the emission intensity was risen from 450 nm and was saturated at 365 nm.

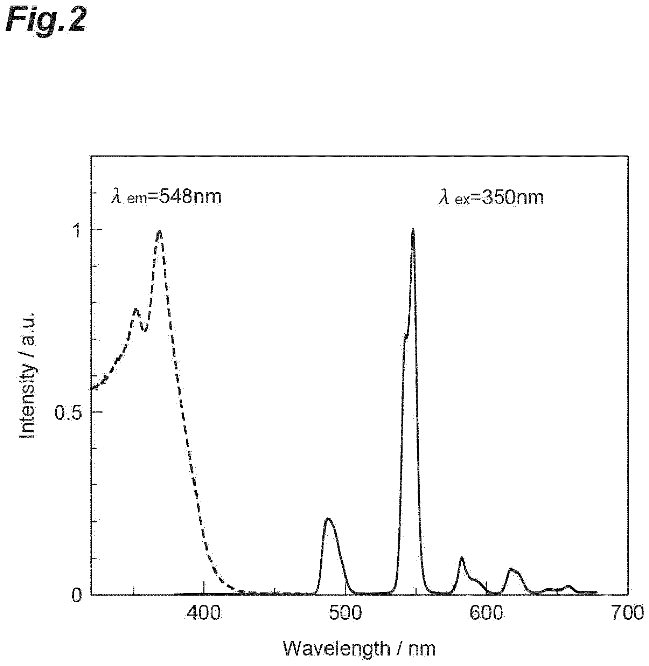

FIG. 2 shows emission and excitation spectra of the rare earth compound 1B (powder). In FIG. 2, the solid line indicates an emission spectrum (excitation wavelength: 350 nm) and the dashed line indicates an excitation spectrum (fluorescence wavelength: 548 nm).

The rare earth compounds 1A and 1B exhibited satisfactory solubility with respect to a solvent such as 2-methyltetrahydrofuran. Rare earth compounds composed of two of 2-diphenylphosphoryl triphenylene, three hfa ligands, and a Tb(III) ion which were synthesized by the same method as in the rare earth compounds 1A and 1B also exhibited satisfactory solubility with respect to a solvent such as 2-methyltetrahydrofuran.

In Table 1, regarding the rare earth compounds 1A and 1B, the absorption constant at a wavelength of 365 nm, the luminescent quantum yields φππ^{∗}, and the emission intensity at an excitation wavelength of 365 nm are shown. It is speculated that the rare earth compound 1B shows the same absorption constant as that of the rare earth compound 1A. In Table 1, the emission properties of a rare earth compound 3 having triphenylphosphine oxide as a ligand and a polymer 4 including a constituent unit that has, as a ligand, phosphine oxide having a biphenylene group are also shown. The absorption constant and the emission intensity are values normalized per one Tb atom. The quantum yields φππ^{∗} of the rare earth compounds 1A and 1B are values measured in the 2-methyltetrahydrofuran solution and the powder, respectively. The rare earth compounds 1A and 1B showed emission intensities 4 to 10 times or more those of the rare earth compound 3 and the polymer 4.

**Table 1**

| | Absorption constant (365 nm) /cm⁻¹M⁻¹ | Φππ^{∗} /% | Emission intensity (365 nm excitation) /cm⁻¹M⁻¹ |
|---|---|---|---|
| Rare earth compound 3 | 180 | 9 | 1620 |
| Polymer 4 | 180 | 17 | 3060 |
| Rare earth compound 1A | 1550 | 9 | 13950 |
| Rare earth compound 1B | - | 22 | 34100 |

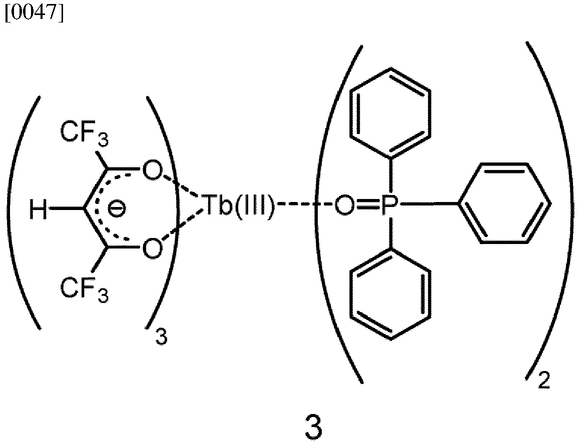

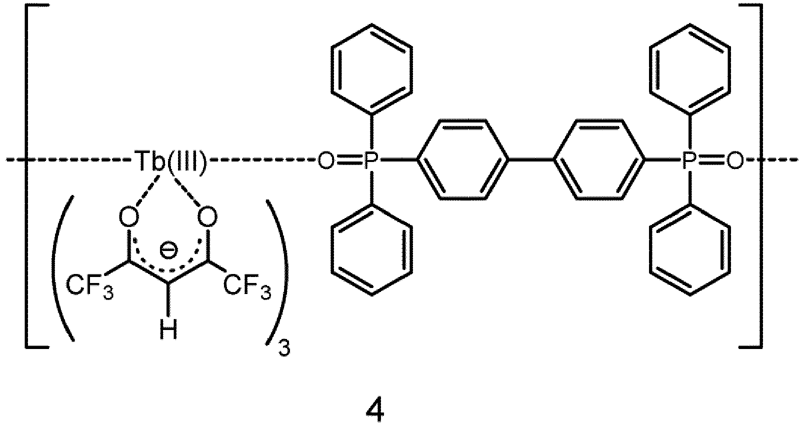

### 2-2. Rare earth compounds 1C and 1D (Tb/Eu, Eu/Eu)

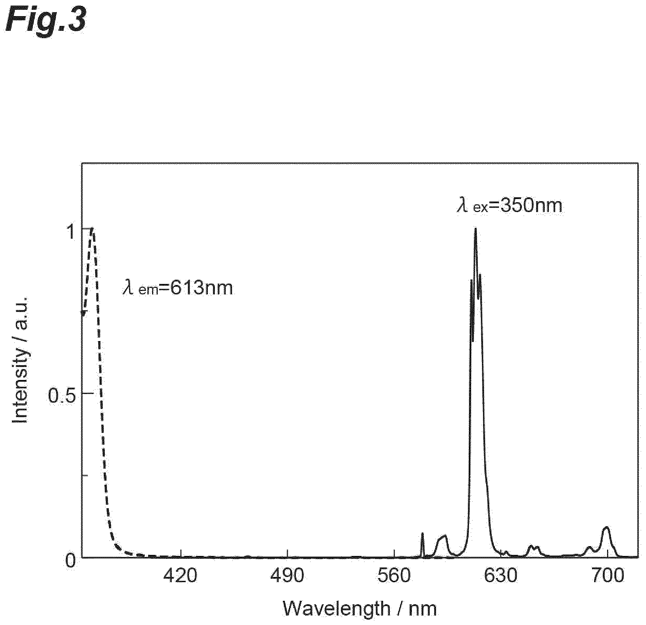

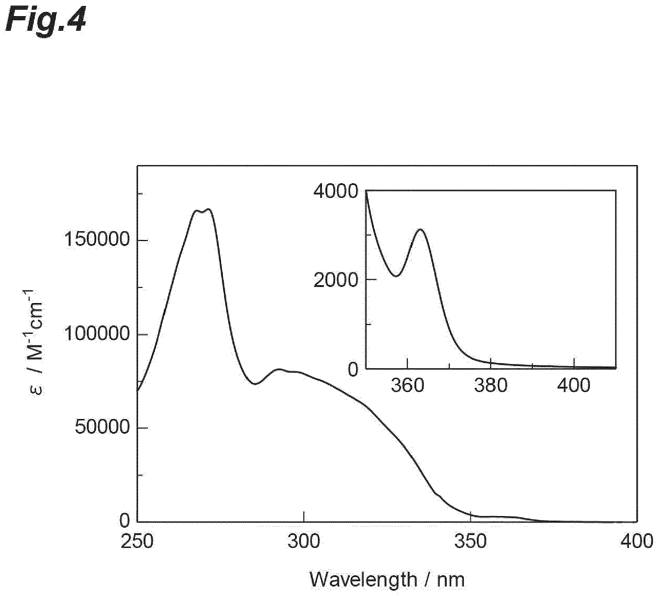

FIG. 3 shows emission and excitation spectra of a chloroform solution (concentration 3×10⁻⁵ M) of the rare earth compound 1D. In FIG. 3, the solid line indicates an emission spectrum (excitation wavelength: 350 nm) and the dashed line indicates an excitation spectrum (fluorescence wavelength: 613 nm). FIG. 4 shows an absorption spectrum of a methylene chloride solution (concentration 2.96×10⁻⁶ M) of the rare earth compound 1D.

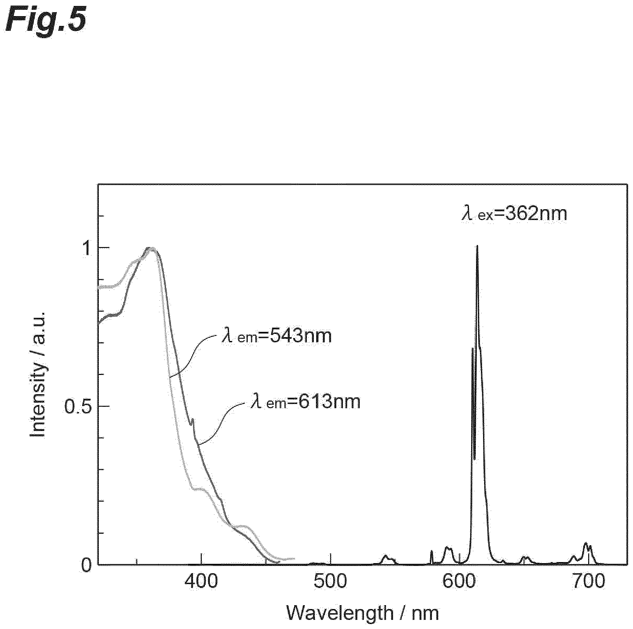

FIG. 5 shows emission and excitation spectra of the rare earth compound 1C (powder). In FIG. 5, excitation spectra at a fluorescence wavelength of 543 nm and a fluorescence wavelength of 613 nm are shown. It is considered that green light emission derived from Tb is shown at a fluorescence wavelength of 543 nm and red light emission derived from Eu is shown at a fluorescence wavelength of 613 nm.

The rare earth compound 1C exhibited satisfactory solubility with respect to a solvent such as 2-methyltetrahydrofuran.

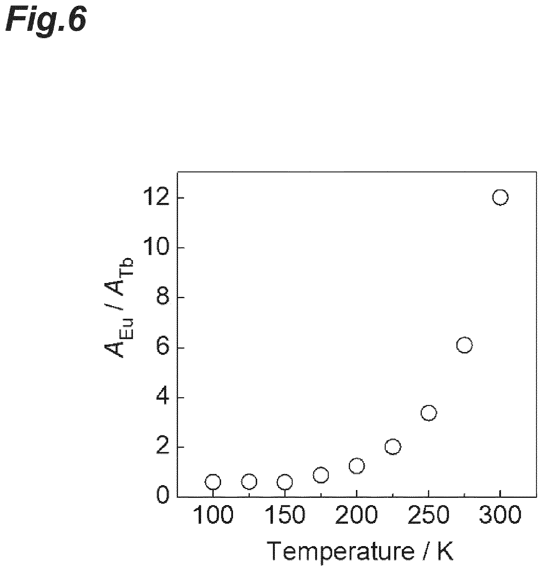

The emission spectra (excitation wavelength: 362 nm) at temperatures of 100 K, 150 K, 200 K, 250 K, and 300 K were measured using the 2-methyltetrahydrofuran solution (concentration 10⁻⁴ M) of the rare earth compound 1C. An emission intensity A_{Tb} at 543 nm and an emission intensity A_{Eu} at 613 nm were obtained and a ratio A_{Eu}/A_{Tb} thereof was obtained. FIG. 6 is a graph showing a relation between an emission intensity ratio A_{Eu}/A_{Tb} and a temperature. The emission intensity ratio A_{Eu}/A_{Tb} changed acutely according to a change in temperature. This means that the rare earth compound 1C can be used as a temperature-sensitive luminescent body having high luminance.

## Claims

1. A rare earth compound comprising:
one or a plurality of rare earth ions; and
a ligand coordinated with the rare earth ion and having a condensed polycyclic aromatic group, wherein
at least part of the rare earth ions is a terbium(III) ion, and
the condensed polycyclic aromatic group is a residue formed by removing a hydrogen atom bonded to a condensed aromatic ring in formula (1) below from a condensed polycyclic aromatic compound represented by formula (1), and the condensed polycyclic aromatic compound optionally has a substituent bonded to the condensed aromatic ring in formula (1).

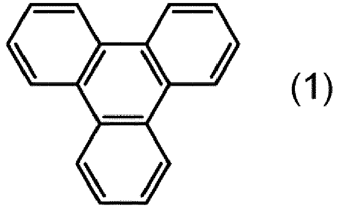

2. The rare earth compound according to claim 1, wherein the ligand having a condensed polycyclic aromatic group is a monodentate phosphine oxide ligand represented by formula (10) below or a bidentate phosphine oxide ligand represented by formula (11) below: 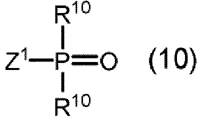 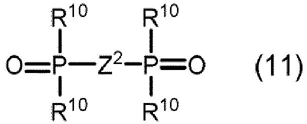 in formulae (10) and (11),
Z¹ represents the monovalent condensed polycyclic aromatic group;
Z² represents the divalent condensed polycyclic aromatic group; and
R¹⁰ represents an aryl group optionally having a substituent and a plurality of R¹⁰s in one molecule may be the same as or different from each other.

3. The rare earth compound according to claim 2, wherein the rare earth compound comprises two rare earth ions, and
the ligand having the condensed polycyclic aromatic group is a bidentate phosphine oxide ligand represented by the formula (11).

4. The rare earth compound according to any one of claims 1 to 3, wherein the rare earth compound comprises a plurality of the rare earth ions, and the plurality of the rare earth ions include a terbium(III) ion and an other rare earth ion.

5. The rare earth compound according to any one of claims 1 to 4, wherein the rare earth compound further comprises a diketone ligand coordinated with the rare earth ion and represented by formula (30) below: 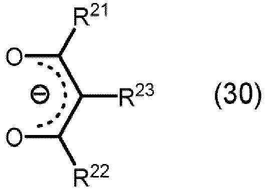 in formula (30), R²¹, R²², and R²³ each independently represent a hydrogen atom, an alkyl group, an halogenated alkyl group, an aryl group, or a heteroaryl group.

6. A phosphine oxide compound represented by formula (20) below: 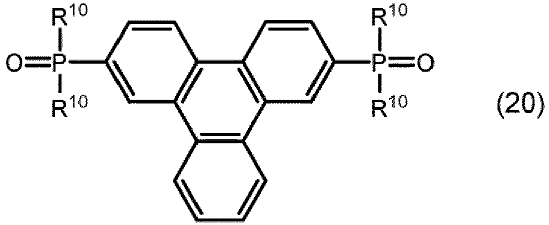 in formula (20), R¹⁰ represents an aryl group optionally having a substituent and a plurality of R¹⁰s in one molecule may be the same as or different from each other.

7. A luminescent body comprising the rare earth compound according to any one of claims 1 to 5.
